# EUROPEAN PATENT APPLICATION

(11) **EP 4 169 818 A1**
(43) Date of publication of application: **26.04.2023**
(21) Application number: 21825329.2
(22) Date of filing: 26.04.2021
(51) Int. Cl.: B62H 3/00, B60L 53/30, A63C 17/00

(54) **CHARGING PARKING STATION FOR ELECTRIC SCOOTERS AND PORTABLE DEVICES**

(30) Priority: 17.06.2020 ES 202000293 U
(71) Applicant: Calleja García, Branco, 08291 Ripollet (ES)
(72) Inventor: Calleja García, Branco, 08291 Ripollet (ES)
(74) Representative: Gallego Jiménez, José Fernando
(86) International application number: PCT/ES2021/070277
(87) International publication number: WO 2021/255303

(57) **Abstract**

A charging parking station suitable for electric scooters and portable devices, which comprises: a casing (1) equipped with a support base (11); access doors (3) with individual security locks (4); and lockers (5) comprising a universal charger with one or more outputs (6), sockets (7), and USB ports (8) for connecting electric scooters and other electronic devices, said lockers having U-shaped spaces (51) at the top and bottom for receiving the stems of electric scooters, all of which is connected to a DIN rail system (9) consisting of sockets (91), a differential (92), a circuit breaker (93), and a universal transformer (94) which are connected to the mains.

## Description

### Technical field.

The present invention relates to a charging parking station suitable for electric scooters and portable devices, such as: mobile phones, electronic tablets or the like.

### Prior state of the art.

The electric scooter has become a very common means of transport in many Spanish and European cities. Specifically in Spain, there are already more than 25,000.

According to a recent study by the leading company in online sales of household appliances, 20% of Spaniards have already tried one, and of this number 85% will continue to use it and 58% are considering buying one. In 2019, scooter sales increased by 500% compared to the previous year.

The growth of this means of transport has been so great in recent months that the Spanish Directorate General of Traffic has had to draw up nationwide guidelines while awaiting the approval of a Royal Decree on Personal Mobility Vehicles (VMP).

Currently, each city has its own regulations regarding electric scooter parking, but as a general rule, it must be parked in places reserved for motorcycles and bicycles or on the sidewalk, as long as a minimum of three metres of safety distance is respected. In some cities, incorrect parking of these vehicles on sidewalks is beginning to be sanctioned. Therefore, for owners of these vehicles it seems that it will be increasingly difficult to find an appropriate and safe place to park them without being fined or stolen.

The battery of electric scooters can last between 4 and 6 hours, depending on the model; and it allows them to travel approximately 25 kilometres, which is about two and a quarter hours of continuous use. When the battery runs out or is about to run out, it is only necessary to recharge it by using an external charger or transformer that connects to a conventional socket from the mains.

However, it is common for the battery of an electric scooter to run out before it can be recharged, meaning that the user cannot use the scooter due to a lack of power until they have a charger and a nearby socket. On multiple occasions, this causes the user to be unable to finish the journey that they were about to make. Therefore, this implies certain drawbacks for users such as: discomfort, stress that tardiness can generate, loss of time and even loss of money, due to having to complete the desired journey on foot or by public or private transport.

### Description of the invention.

The charging parking station for electric scooters and portable devices object of the present invention has technical features designed to offer better use of electric scooters equipped with rechargeable batteries, allowing them to be recharged in public places, such as: shopping centres, hospitals, hotels, schools, universities, supermarkets, town halls and others. Likewise, it offers the possibility of parking electric scooters in a safe and orderly manner, as well as storing and/or charging other devices inside their corresponding locker, such as: helmets that are recommended for protection, mobile phones, tablets, among others.

Said charging parking station comprises a casing made up of four individual lockers to be able to park and charge electric scooters, interchangeably. It is adjustable and is designed to be expanded to multiples of 4. Each locker has a door with an individual locking system for greater security.

Said casing houses different charging systems in each of its lockers: a universal charger with one or more outputs, sockets and USB ports. These charging systems are necessary to enable the charging of different electric scooters with the chargers characteristic of each scooter brand and model, as well as to also enable the charging of other portable devices that users want to charge, such as mobile phones or tablets. Said charging systems are connected to a DIN rail system with European-type connection sockets together with a differential and a circuit breaker device which function is to protect the electrical installation from overloads or short circuits; in addition to the universal transformer.

The entire casing can be customised; all areas: the front, sides and rear are suitable for the placement of advertising supports intended to promote the client's same commercial brand or to inform about the correct operation of the device.

The installation of the charging parking station in the client's establishment is carried out through ground anchors. It requires a connection to the mains and includes the possibility of a system for generating electricity through solar energy.

### Brief description of the contents of the drawings.

As a complement to the description provided herein, and for the purpose of helping to make the features of the invention more readily understandable, the present specification is accompanied by a set of drawings which, by way of illustration and not limitation, represent the following:
- Figure 1 shows a front perspective view of an exemplary embodiment of the charging parking station, according to the invention, in a position of use.
- Figure 2 shows a front view of the inside of the lockers of the charging parking station of Figure 1.
- Figure 3 shows a rear perspective view of the charging parking station of the previous figures.
- Figure 4 shows a rear internal perspective view of the charging parking station of the previous figures.
- Figure 5 shows a top front view of a variant embodiment of the charging parking station, incorporating a system for generating electricity through solar energy.

### Detailed description of embodiments of the invention.

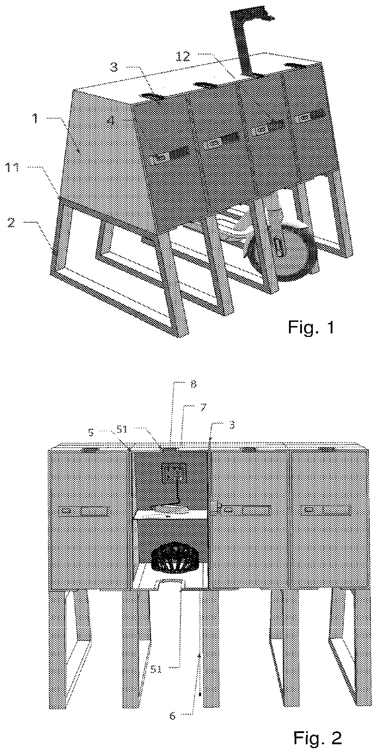

In the exemplary embodiment shown in Figures 1 to 5, the charging parking station comprises: a casing (1) with a general prismatic configuration made of steel or another suitable material. It has been treated by cataphoresis for its potential continued outdoor exposure.

Said casing (1) has a support base (11) that takes the form of trestles (2) arranged side by side for its support directly on the ground.

The top front part (12) of the casing (1) has access doors (3) to the charging parking station made of high pressure laminate or another suitable material. The locks (4) are arranged approximately midway on all of these doors. These locks can be represented by different variants such as: electronics, key, mobile application, etc.

In Figure 2, the access doors (3) are open and the inside of the casing is shown. In each of the lockers (5) of said casing there are different spaces comprising: a universal charger with one or more outputs (6) for connecting any type of scooter, a socket (7) and USB ports (8) for connecting other small mobile devices. These spaces in turn comprise areas to store the scooter and other items, such as a helmet.

The top and bottom of the locker (5) has U-shaped spaces (51) to house the stem of an electric scooter before closing the locker door that acts as a stop.

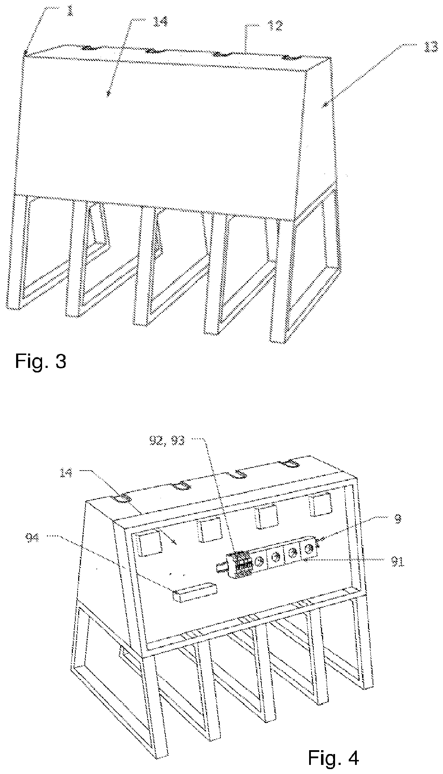

The charging parking station comprises customisable surfaces throughout its casing (1): front (12), sides (13) and rear (14) shown in Figure 3, suitable for the placement of stationary advertising or information supports.

Figure 4 shows the internal rear part (14) of the charging parking station containing the components to which the charging systems shown in Figure 2 are connected: a universal charger with one or more outputs (6), sockets (7) and USB ports (8). It shows a DIN rail system (9) with sockets (91), a differential (92), and a circuit breaker (93) to protect the electrical installation from overloads or short circuits; as well as the universal transformer (94). A connection to the mains is required for the installation and correct operation of the equipment.

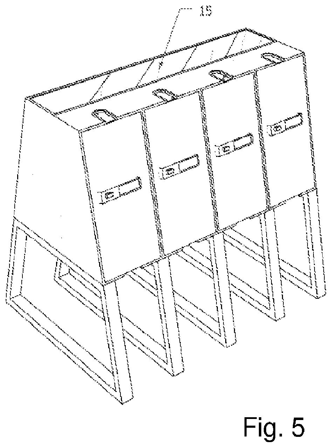

Figure 5 shows a variant embodiment of the charging parking station, incorporating a system for generating electricity through solar energy (15).

Having sufficiently described the nature of the invention, in addition to a preferred exemplary embodiment, it is hereby stated for the relevant purposes that the materials, shape, size and layout of the described elements may be modified, provided that it does not imply altering the essential features of the invention claimed below.

## Claims

1. A charging parking station suitable for electric scooters and portable devices;
**characterised in that** it comprises:
- a casing (1) equipped with a support base (11);
- access doors (3) with individual security locks (4);
- lockers (5) comprising: a universal charger with one or more outputs (6), sockets (7), and USB ports (8) for connecting electric scooters and other electronic devices; said lockers having U-shaped spaces (51) at the top and bottom for receiving the stems of electric scooters;
- all of which is connected to a DIN rail system (9) consisting of sockets (91), a differential (92), a circuit breaker (93) and a universal transformer (94) which are connected to the mains.

2. The charging parking station, according to claim 1, **characterised in that** it comprises variants for opening the access doors (3): electronics, key or mobile application.

3. The charging parking station, according to any one of the preceding claims, **characterised in that** the casing (1) has a general prismatic configuration which base (11) takes the form of trestles (2).

4. The charging parking station, according to any one of the preceding claims; **characterised in that** it comprises customisable surfaces throughout its casing (1): front (12), sides (13) and rear (14), suitable for the placement of advertising or information supports.

5. The charging parking station, according to any one of the preceding claims; **characterised in that** it comprises a system for generating electricity through solar energy (15).
